**Europäisches Patentamt**

**European Patent Office**

**Office européen des brevets**

(11) Numéro de publication: **0 029 397**
**A1**

# (12) DEMANDE DE BREVET EUROPEEN

(21) Numéro de dépôt: **80401659.0**

(22) Date de dépôt: **19.11.80**

(51) Int. Cl.³: **B 29 C 27/08,** A 41 G 3/00

(30) Priorité: **20.11.79 FR 7928572**

(43) Date de publication de la demande: **27.05.81**
**Bulletin 81/21**

(84) Etats contractants désignés: **AT DE GB IT**

(71) Demandeur: **R. GEORGE S.A., 26 Boulevard de Strasbourg, F-75010 Paris (FR)**

(72) Inventeur: **Francois, Alain, 34 Avenue du Chateau, F-92190 Meudon (FR)**

(74) Mandataire: **Dupuy, Louis, CREUSOT-LOIRE 15 rue Pasquier, F-75383 Paris Cedex 8 (FR)**

(54) **Procédé de fabrication de mèches à partir de fibres synthétiques, dispositif de mise en oeuvre de ce procédé et mèches ainsi obtenues.**

(57) Procédé de fabrication de mèches à partir de fibres synthétiques groupées en un faisceau 15.

On effectue sur le faisceau 15, à intervalles réguliers, successivement:

— un point de soudure 16 des fibres entre elles,

— une coupe des fibres soudées, au centre 17 du point de soudure 16, le point de soudure et la coupe étant effectuée au moyen d'ultrasons.

Le dispositif de mise en œuvre du procédé comporte, placés l'un au-dessus de l'autre, avec un espace entre eux pour le défilement du faisceau 15 de fibres:

— une enclume 8 comportant une surface en pointe 9 directrice d'énergie,

— un élément 10 mobile verticalement comportant un émetteur 11 d'ultrasons et un outil ultrasonore 12, avec des moyens de déplacement de l'élément mobile et de programmation 13, d'une part du déplacement de l'élément mobile 10 et d'autre part de la mise en fonctionnement de l'émetteur 11 d'ultrasons et de son arrêt.

Application à la fabrication de mèches synthétiques destinées en particulier aux professions rattachées à la coiffure.

ACTORUM AG

"Procédé de fabrication de mèches à partir de fibres synthétiques,

dispositif de mise en oeuvre de ce procédé et mèches ainsi obtenues"

L'invention concerne la fabrication de mèches à partir de fibres synthétiques.

On a souvent besoin, dans certaines professions telles que la fabrication de perruques, de poupées ou de teintures capillaires, de mèches de cheveux.

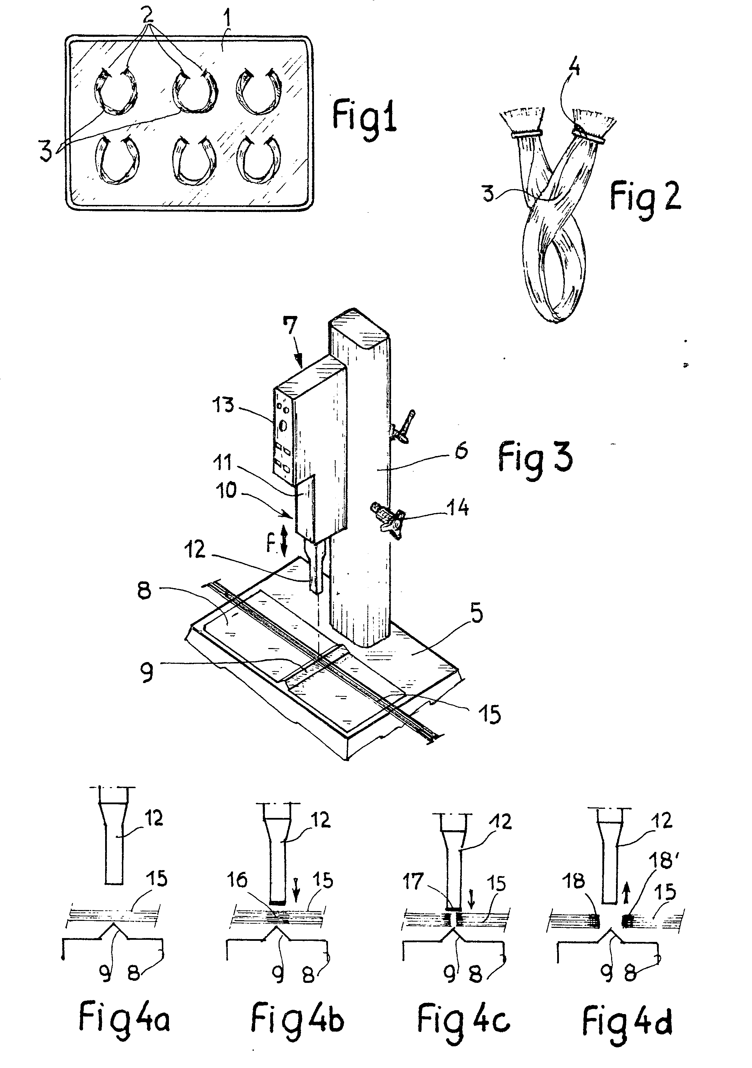

Dans le cas des teintures, par exemple, les mèches sont destinées à présenter à la clientèle des salons de coiffure les différentes couleurs ou nuances qui sont à leur disposition. En général, ces mèches sont placées sur un présentoir tel que celui que l'on a représenté à la figure 1. Le présentoir 1 est un tableau, de préférence en carton, percé de petits trous 2 dans lesquels sont enfilées les mèches 3, ces dernières étant le plus souvent constituées de fibres synthétiques (polyamide, nylon, par exemple) en raison du prix élevé des vrais cheveux.

Les présentoirs étant destinés à être souvent manipulés, il est nécessaire que les fibres qui constituent chaque mèche soient fixées solidement entre elles aux extrémités de la mèche.

Certains fabricants utilisent des agrafes, comme on l'a représenté à la figure 2. Toutefois, une telle liaison n'est pas très solide et les agrafes 4 risquent de détériorer le présentoir à l'endroit des trous 2, rendant ainsi impossible la réutilisation du présentoir pour d'autres mèches colorées différemment.

On a également utilisé pour la fabrication des mèches, une lame chauffée au gaz. Dans ce cas, la coupe des longs faisceaux de fibres est effectuée en même temps que la soudure de ces fibres aux extrémités coupées.

Cette technique présente les avantages suivants : on effectue deux opérations en même temps, la coupe et la liaison des fibres aux extrémités des mèches ; en outre, la liaison des fibres, obtenue par soudure, est une liaison très solide.

Toutefois, cette technique présente un inconvénient : au moment de la soudure, la matière qui constitue les fibres est portée à haute température pendant un temps suffisamment long pour permettre à cette matière de couler et la soudure n'est pas parfaite: elle n'est pas homogène, s'étale sur une longueur relativement grande à chaque extrémité de la mèche et comporte des bavures qui risquent d'abîmer le présentoir au moment de la pose des mèches. En outre, ce procédé n'est pas énergétiquement éco-

nomique et on ne peut pas éviter la formation de fumée.

La présente invention tente de remèdier à ces inconvénients : elle permet de fabriquer de façon rapide et économique des mèches aux extrémités homogènes, plates et sans bavure.

L'invention a pour objet un procédé de fabrication de mèches à partir de fibres synthétiques groupées en un faisceau. Selon l'invention, on effectue sur le faisceau à intervalles réguliers, successivement :
- un point de soudure des fibres entre elles,
- une coupe des fibres soudées, au centre du point de soudure,
le point de soudure et la coupe étant effectués au moyens d'ultrasons.

Dans un mode préféré de l'invention, l'énergie émise par les ultrasons est dirigée vers le point précis à souder et l'émetteur d'ultrasons est approché de ce point en deux phases successives, la première correspondant au soudage et la deuxième à la coupe, puis remonté ; les ultrasons sont émis seulement pendant les phases de descente.

L'invention a aussi pour objet un dispositif de mise en oeuvre de ce procédé. Ce dispositif comporte, placés l'un au-dessus de l'autre, avec un espace entre eux pour le défilement du faisceau de fibres :
- une enclume comportant une surface en pointe directrice d'énergie,
- un élément mobile verticalement comportant un émetteur d'ultrasons et un outil ultrasonore, avec des moyens de déplacement de l'élément mobile et de programmation -d'une part du déplacement de l'élément mobile, constitué d'une descente en deux phases et d'une montée continue- d'autre part de la mise en fonctionnement de l'émetteur d'ultrasons au cours de la descente puis de son arrêt au cours de la montée.

L'invention a également pour objet des mèches de fibres synthétiques obtenues au moyen du procédé selon l'invention.

L'invention va maintenant être décrite avec plus de détails en se référant, à titre d'exemple, à un mode de réalisation représenté par les figures 3 et 4 annexées.

La figure 3 représente en perspective un exemple de réalisation du dispositif selon l'invention.

Les figures 4a à 4d illustrent le procédé réalisé au moyen du dispositif de la figure 3.

Sur toutes les figures, les éléments correspondants portent les mêmes repères.

La figure 3 représente un poste de soudure constitué d'une base 5, d'une colonne rigide 6 et d'un caisson 7.

3    0029397

Sur la base 5 se trouve une enclume 8 comportant une surface 9 en pointe directrice d'énergie.

Le caisson 7 contient un élément 10 mobile verticalement dans la direction de la flèche f et comporte un émetteur d'ultrasons 11 et un outil ultrasonore ou sonotrode 12. (On n'insistera pas dans cette description sur les procédés utilisés pour produire les ultrasons car de tels procédés sont connus et ne font pas l'objet de notre invention).

Le caisson 7 comporte également un programmateur 13 qui commande d'une part le déplacement de l'élément mobile 10 (les moyens de déplacement peuvent être constitués par un vérin, non représenté) et d'autre part la mise en fonctionnement de l'émetteur 11 d'ultrasons.

Le fonctionnement du dispositif est le suivant :

- on met en place le poste de soudure de façon à ce que la sonotrode 12 soit bien située au-dessus de la surface en pointe 9 de l'enclume 8. On règle la hauteur du caisson 7 au moyen de la crémaillère 14. On place le faisceau 15 de fibres entre la sonotrode 12 et la pointe 9 de l'enclume, bien au-dessous de la sonotrode 12. Des moyens non représentés permettent de tenir le faisceau 15 bien tendu. On est ainsi en position de repos (figure 4a).

- On passe ensuite en position de travail. Le programmateur 13 commande d'une part la première phase de la descente de la sonotrode 12 en direction de l'enclume 8 et d'autre part la mise en fonctionnement de l'émetteur 11 d'ultrasons. Au cours de cette première phase de descente, les ultrasons émis par la sonotrode 12 effectuent le soudage des fibres synthétiques sur une portion 16 du faisceau 15 située immédiatement au-dessous de la sonotrode 12 (figure 4b).

- Au cours de la deuxième phase de descente, commandée par le programmateur 13, les ultrasons émis par la sonotrode 12 effectuent la coupe des fibres au centre 17 du point de soudure 16. Cette coupe est rendue possible grâce à la forme en pointe de l'enclume qui dirige en un point l'énergie émise par les ultrasons plutôt que de la disperser sur une surface plus étendue (figure 4c).

- La dernière phase est la phase de remontée de la sonotrode 12. La remontée est commandée par le programmateur 13 qui commande également l'arrêt de l'émission d'ultrasons. Cette émission n'est en effet plus nécessaire et on constitue une économie énergétique en la faisant fonctionner de façon intermittente. Les extrémités 18 et 18' que l'on a ainsi obtenues sont très plates, homogènes, sans bavure et n'ont consommé qu'une faible portion 16 de la matière constituant les fibres. (figure 4d).

Le procédé décrit ci-dessus permet d'obtenir très rapidement, en une seule manoeuvre, des mèches tenues solidement par des soudures de bonne qualité, sans bavure, et très plates.

En outre, ce procédé est propre, sans fumée. Il consomme une énergie faible, d'autant plus que cette énergie est consommée de façon intermittente.

Bien entendu, l'invention n'est pas strictement limitée au seul mode de réalisation qui a été décrit à titre d'exemple, mais elle couvre également d'autres modes qui n'en différeraient que par des variantes.

Ainsi, la forme de l'enclume pourrait être conçue différemment.

Si, par exemple, celle-ci était plane et ne comportait pas d'angle, les fibres seraient soudées mais non coupées : on obtiendrait un chapelet de fibres avec une soudure à intervalles réguliers.

La sonotrode peut prendre aussi des formes différentes ; la forme de la sonotrode influe en effet sur de nombreux paramètres, en particulier sur l'amplitude des ultrasons.

Bien entendu, l'invention n'est pas limitée à la fabrication de mèches destinées aux professions de la coiffure mais elle peut s'appliquer à chaque fois que l'on veut fabriquer des tronçons de faisceaux de fibres pourvu que la matière constituant ces fibres permette un soudage par ultrasons.

# 0029397

## REVENDICATIONS

1.- Procédé de fabrication de mèches à partir de fibres synthétiques groupées en un faisceau (15), caractérisé par le fait que l'on effectue sur le faisceau, à intervalles réguliers, successivement :
- un point de soudure (16) des fibres entre elles,
- une coupe des fibres soudées, au centre du point de soudure,
le point de soudure et la coupe étant effectués au moyen d'ultrasons.

2.- Procédé de fabrication de mèches selon revendication 1, caractérisé par le fait que l'énergie émise par les ultrasons est dirigée vers le point précis à souder, que l'émetteur d'ultrasons est approché de ce point en deux phases successives, la première correspondant au soudage et la deuxième à la coupe, puis remonté, les ultrasons étant émis seulement pendant les phases de descente.

3.- Dispositif de mise en oeuvre du procédé selon revendication 1 ou 2, caractérisé par le fait qu'il comporte, placés l'un au-dessus 'de l'autre, avec un espace entre eux pour le défilement du faisceau de fibres:
- une enclume (8) comportant une surface en pointe (9) directrice d'énergie,
- un élément (10) mobile verticalement comportant un émetteur d'ultrasons (11) et un outil ultrasonore (12), avec des moyens de déplacement de l'élément mobile et de programmation - d'une part du déplacement de l'élément mobile, constitué d'une descente en deux phases et d'une montée continue - d'autre part de la mise en fonctionnement de l'émetteur d'ultrasons au cours de la descente puis de son arrêt au cours de la montée.

4.- Mèche de fibres synthétiques caractérisée par le fait qu'elle est obtenue au moyen du procédé selon revendication 1 ou 2.

0029397

1/1

Fig1

Fig 2

Fig 3

Fig4a　　　Fig4b　　　Fig4c　　　Fig4d

Office européen
des brevets

**RAPPORT DE RECHERCHE EUROPEENNE**

| Catégorie | Citation du document avec indication, en cas de besoin, des parties pertinentes | Revendication concernée |
|---|---|---|
| A | <u>GB – A – 1 257 987</u> (ULTRASONIC SYSTEMS INC.) <br> * Page 2, lignes 1-37; revendication 1; figure 8 * | 1 |
| A | <u>FR – A – 1 446 371</u> (J.B. DAMET) <br> * Page 2, colonne 1, alinéas 2-5; résumé point 5; figure 3 * | 1 |
| A | <u>FR – A – 2 134 145</u> (L'OREAL) <br> * Revendication 1 * | 1 |
| A | <u>FR – A – 2 318 964</u> (RHONE POULENC) <br> * Page 1, lignes 25-32; page 2, lignes 6 et 7, 12-18 * | 1 |
| A | <u>US – A – 4 075 046</u> (THOMAS TAYLOR & SONS INC.) <br> * Colonne 2, lignes 40-61; figures 1-3 * | 1 |
| A | <u>DE – A – 1 704 283</u> (REIFENHAUSER K.G.) <br> * En entier * | 3 |

**DOCUMENTS CONSIDERES COMME PERTINENTS**

**CLASSEMENT DE LA DEMANDE** (Int. Cl. 3)

B 29 C 27/08
A 41 G 3/00

**DOMAINES TECHNIQUES RECHERCHES** (Int. Cl. 3)

B 29 C
A 41 G

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 23-01-1981 | GARNIER |

OEB Form 1503.1 06.78